# EUROPEAN PATENT SPECIFICATION

(11) **EP 1 802 149 B1**
(45) Date of publication and mention of the grant of the patent: **01.04.2009**
(21) Application number: 06126620.1
(22) Date of filing: 20.12.2006
(51) Int. Cl.: H04W 4/22

(54) **Apparatus and method for an emergency call in a mobile communication terminal**
Vorrichtung und Verfahren für Notrufe bei einem mobilen Kommunikationsendgerät
Appareil et procédé d'appel d'urgence pour un terminal de communication mobile

(30) Priority: 21.12.2005 KR 20050126637
(43) Date of publication of application: 27.06.2007
(73) Proprietor: Samsung Electronics Co., Ltd., Suwon-si, Gyeonggi-Do (KR)
(72) Inventor: Chae, Hee-Joon, Seocho-gu Seoul (KR); Sohn, Chang-Ho, Seongnam-si Gyeonggi-do (KR); Joo, Jung-Hoon, Suwon-si Gyeonggi-do (KR)
(74) Representative: Grünecker, Kinkeldey, Stockmair & Schwanhäusser Anwaltssozietät

(56) References cited:
- WO-A-92/16077
- WO-A-99/60807
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V650, March 2005 (2005-03), XP014027644 ISSN: 0000-0001
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-CN1, no. V730, September 2005 (2005-09), XP014032445 ISSN: 0000-0001

## Description

The present invention generally relates to an apparatus and a method for an emergency call in a mobile communication terminal, and more particularly to an apparatus and a method for a cell search for transmitting an emergency call in a dual mode mobile communication terminal.

A cell search is normally performed for transmitting an emergency call, such as an SOS call, regardless of a network mode when a Subscriber Identification Mobile (SIM) card is not inserted in a dual mode terminal supporting a Global System for Mobile communication (GSM) and a Universal Mobile Telecommunication System (UMTS). The network mode corresponds to a network environment set in the mobile communication terminal. When a call connection occurs, the network environment is set to use the UMTS and/or the GSM in the mobile communication terminal.

A mobile communication system includes a synchronous system and an asynchronous system. A synchronous system includes a system such as an IS-95 series Code Division Multiple Access (CDMA) system and 1x Evolution Data Only (EV-DO) system. An asynchronous system includes a system such as a GSM system using Time Division Multiple Access (TDMA) and a UMTS system which is developed from a General Packet Radio Service (GPRS) system. The GSM system and the UMTS system are collectively called the GSM series system.

Generally, a SIM card including user's personal information is inserted in a mobile communication terminal in the GSM series mobile communication terminal, and the mobile communication terminal identifies the user by the SIM card. If the user has been registered in the network, the mobile communication terminal performs a normal operation.

If the SIM card is not inserted in the GSM series mobile communication terminal, the mobile communication terminal cannot identify the user's information and operate normally.

However, a GSM series mobile communication terminal has a function of transmitting an emergency call in an emergency even if the SIM card is not inserted. When an emergency call occurs, cells in the corresponding network are searched for an optimum channel for transmitting the emergency call.

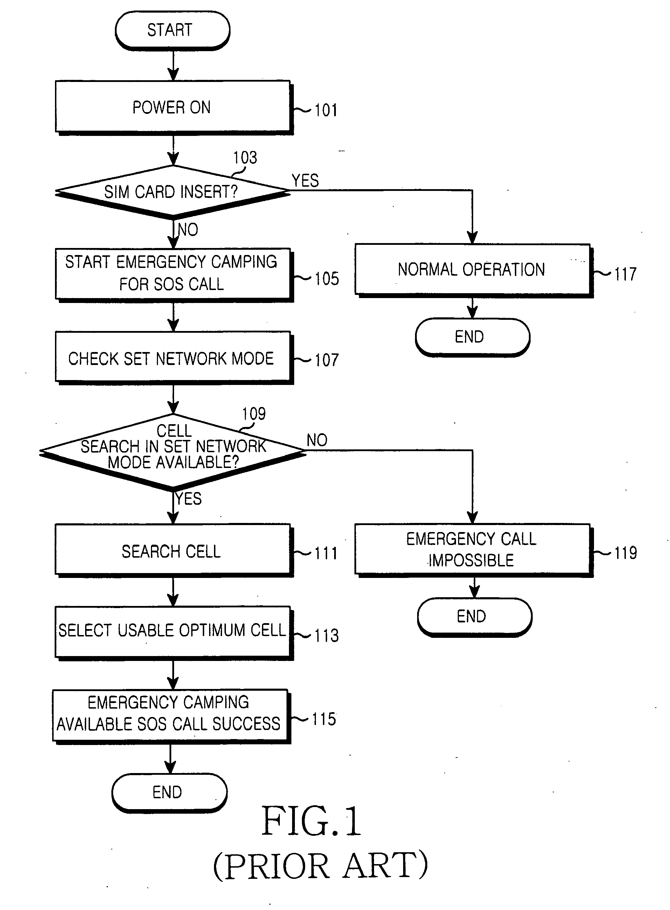

FIG. 1 is a flowchart illustrating a conventional procedure of a cell search for an emergency call in the form of an SOS call when a SIM card is not inserted in a mobile communication terminal.

If power is turned on in step 101, the MPU proceeds to step 103 to check whether a SIM card has been inserted in the mobile communication terminal.

If the SIM card has been inserted, the MPU proceeds to step 117 to perform the normal operation and the process ends.

Meanwhile, if the SIM card is not inserted, the MPU proceeds to step 105 to check whether an emergency camping mode for transmitting an SOS call has started. The emergency camping mode searches an optimum channel to transmit the SOS call to a server managing the SOS call when a user requests the SOS call in an emergency.

If the emergency camping mode has started, the MPU proceeds to step 107 to check a network mode in the mobile communication terminal.

The MPU then proceeds to step 109 to check whether the network mode is installed in a region where the mobile communication terminal is located so cells of the network can be searched. If a cell search is not available, the MPU proceeds to step 119 to confirm that the SOS call cannot be transmitted. After this, the process ends.

Meanwhile, if a cell search is available, the MPU proceeds to step 111 to search the cells for transmitting the SOS call according to the network mode. For example, if the network mode is an automotive mode using both the UMTS and GSM networks, the MPU searches cells in both the UMTS and GSM networks. If the network mode is the UMTS only mode, the MPU only searches cells of the UMTS network. If the network mode is only the GSM mode, the MPU only searches cells of the GSM network.

After this, the MPU proceeds to step 113 to select an optimum cell available from the searched cells. The MPU proceeds to step 115 to confirm an emergency camping mode for transmitting an SOS call is successful. Then, the process ends.

As described above, if a SIM card is not inserted, cells are searched in the preset network mode for transmitting an SOS call. However, if the preset network mode is different from the network installed in the region where the mobile communication terminal is located, no cell is searched, and thus, the SOS call cannot be transmitted.

For example, if a mobile communication terminal having a UMTS mode is turned on without a SIM card in the region where only the GSM network exists, searching of the cells of the UMTS network is attempted. Cells of the GSM network cannot be searched, and thus, the SOS call cannot be transmitted.

"Universal Mobile Telecommunications System (UMTS)" ETSI standards, European Telecommunications Standards Institute, Sophia-Antipo, Fr, vol. 3-R2, no. V650, March 2005 relates to UMTS user equipment procedures in idle mode and procedures for cell reselection in connected mode. In particular, it describes idle mode functionality of a dual Radio Access Technology (RAT) UTRA/GSM user equipment. An "acceptable cell" is defined as a cell on which the user equipment (UE) may camp to obtain limited service like emergency calls. The only conditions for a cell to be an acceptable cell is not to be barred and to fulfil the cell selection criteria. It is further stated that a UE can always attempt emergency calls on an acceptable cell. In the case where no USIM is inserted in the UE, the UE is set in the "Any Cell Selection" state. The state "any cell selection" is a state where the UE shall attempt to find an acceptable cell on any Public Land Mobile Network (PLMN) to camp on, trying all RATs that are supported by the UE and searching first for a high quality cell.

WO 99/60807 A relates to a multi-mode mobile terminal allowing the greatest possible service availability when the subscriber identity in at least one of the network modes is invalid. The mobile terminal provides the ability to switch communication service from a current mode to an alternative mode to process emergency calls. In particular, the system resolves the problem of multi-mode mobile terminals service selection protocols where a subscriber identification has been determined to be invalid. Based on services availability information for each communication network available to the mobile terminal, the mobile terminal selects an appropriate network to utilize for a call initiated while the mobile terminal has no valid subscriber identification. An example of such a call would be an emergency call. This may be obtained with any multi-mode terminal having a means for associating a subscriber identity with a mobile terminal.

Therefore, an apparatus and a method for cell search for an emergency call even in a network which is not preset in a dual mode mobile communication terminal without a SIM card are needed.

It is the object of the present invention to provide an apparatus and a method for a cell search for an emergency call even in a network which is not preset in a dual mode terminal supporting a GSM communication and a UMTS communication without a SIM card.

This object is solved by the subject matter of the independent claims.

Preferred embodiments are defined in the dependent claims.

An aspect of the present invention is to provide an apparatus and a method for a cell search for an emergency call in all networks when a SIM card is not inserted in a dual mode terminal supporting a GSM communication and a UMTS communication.

According to one aspect of the present invention for achieving the above, the method of a cell search for transmitting an emergency call in a plurality of mode mobile communication terminals includes searching cells of all networks supported by the mobile communication terminal when a SIM card is not inserted during an emergency call mode and selecting an optimum cell.

According to another aspect of the present invention for achieving the above, the method of a cell search for transmitting an emergency call in a dual mode terminal supporting a GSM communication and a UMTS communication includes searching cells in both GSM and UMTS networks supported by the dual mode terminal when a SIM card is not inserted during an emergency call mode and selecting an optimum cell.

According to still another aspect of the present invention for achieving the above, an apparatus of a cell search for transmitting an emergency call in a mobile communication terminal supporting a plurality of network modes includes a controller for searching cells of all networks supported by the mobile communication terminal when a SIM card is not inserted during an emergency call mode and selecting an optimum cell.

According to still another aspect of the present invention for achieving the above, an apparatus of a cell search for transmitting an emergency call in a dual mode terminal supporting a GSM communication and a UMTS communication includes a controller for searching cells in both GSM and UMTS networks supported by the dual mode terminal when a SIM card is not inserted during an emergency call mode and selecting an optimum cell.

The present invention will become more apparent from the following detailed description when taken in conjunction with the accompanying drawings in which:

FIG. 1 is a flowchart showing a cell search process for an emergency call when a SIM card is not inserted in a conventional mobile communication terminal;

FIG. 2 is a block diagram of a mobile communication terminal according the present invention; and

FIG. 3 is a flowchart showing a cell search process for an emergency call when a SIM card is not inserted in a dual mode mobile communication terminal according to the present invention.

Preferred embodiments of the present invention will be described herein below with reference to the accompanying drawings. In the following description, well-known functions or constructions are not described in detail.

Hereinafter, the present invention will be described with reference to an apparatus and method of a cell search for transmitting an emergency call in all networks when a SIM card is not inserted in a communication terminal supporting a plurality of network modes, such as a dual mode communication terminal supporting a GSM communication and an UMTS communication.

Here, a SIM card may be a chip storing permission information for using a mobile phone roaming service and user's personal information. By inserting a SIM card in a mobile communication terminal, a user can use the mobile communication terminal with his or her telephone number in every region regardless of a mobile phone technology standard in use.

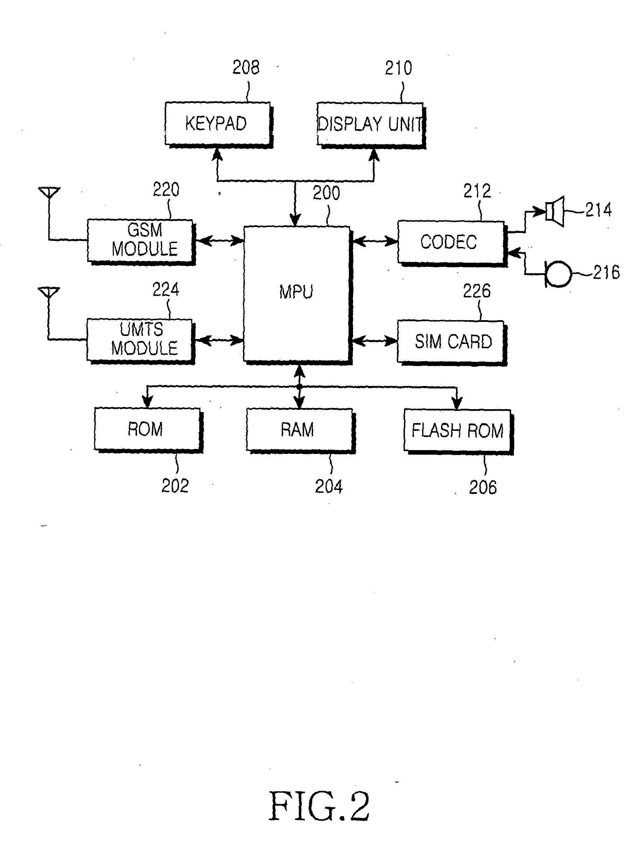

FIG. 2 is a block diagram of a mobile communication terminal according to the present invention. The mobile communication terminal includes a cellular phone, a Personal Communication System (PCS) terminal, a Personal Data Assistant (PDA) or IMT2000 (International Mobile Telecommunication-2000) terminal, all of which are supporting plural network modes, including a GSM communication and an UMTS communication.

Referring to FIG. 2, a Micro-Processor Unit (MPU) 200 is a controller controlling an overall operation of the mobile communication terminal. For example, the MPU 200 is responsible for processing and controlling voice communication and data communication. In addition to the typical functions, the MPU 200 performs a function for searching cells in networks for an emergency call when a SIM card is not inserted in a dual mode terminal supporting a GSM communication and a UMTS communication. A detailed description of the generally processing and controlling operation of the MPU 200 will not be described.

A Read Only Memory (ROM) 202 stores software for processing and controlling the MPU 200 and all reference data. In particular, the ROM 202 stores a program for searching cells of all networks for an SOS call when a SIM card is not inserted. A Random Access Memory (RAM) 204, which is a working memory of the MPU, stores temporary data being generated during processing. A flash ROM 206 stores various updatable data to be kept, such as a phone book, an outgoing message, an incoming message, etc.

A key pad 208 may include number keys of digits 0-9 and a plurality of function keys, such as a MENU key, a CANCEL (REMOVE) key, an ENTER key, a TALK key, an END key, an internet connection key, navigation keys (▲/▼/◄/►), character input keys, etc. The key input data corresponding to a key pressed by the user is transmitted to the MPU 200.

The display unit 210 displays status information, a restricted number of characters, moving pictures, still pictures, etc. The display unit 210 may be a color Liquid Crystal Display (LCD).

A Coder-Decoder (CODEC) 212 connected to the MPU 200, a microphone 216, and a speaker 214 connected to the CODEC 212 are audio input/output blocks for use in voice communication. The MPU 200 produces Pulse-Code Modulation (PCM) data and the CODEC 212 converts the PCM data into analog audio signals. The analog audio signals are output through the speaker 214. The CODEC 212 also converts analog audio signals received through the microphone 216 into PCM data and provides the PCM data to the MPU 200.

A UMTS module 224 includes a Radio Frequency (RF) unit and a baseband processor. The UMTS module 224 operates in case a UMTS network mode is selected by the control of the MPU 200. In case of the data reception, the RF unit drops a frequency of an RF signal received through an antenna and provides the RF signal to a baseband processor. The RF unit performs despreading and channel decoding for reception data. During data transmission, the baseband processor performs channel coding and spreads transmitting data. The RF unit increases a frequency of a baseband signal provided from the baseband processor and transmits the baseband signals through the antenna.

A GSM module 220 includes an RF unit and a baseband processor. The GSM module 220 operates in case a GSM network mode is selected by the control of the MPU 200. During data reception, the RF unit converts an RF signal received through an antenna to an intermediate frequency and provides the intermediate frequency to a baseband processor. The RF unit demodulates a baseband signal from the provided intermediate frequency. During data transmission, the baseband processor modulates transmission data to an intermediate frequency and provides the intermediate frequency to the RF unit. The RF unit converts the intermediate frequency to an RF signal and transmits the RF signal through the antenna.

A SIM card 226 can be inserted in and removed from the mobile communication terminal. The SIM card 226 has its own micro-processor and memory chip and stores user information.

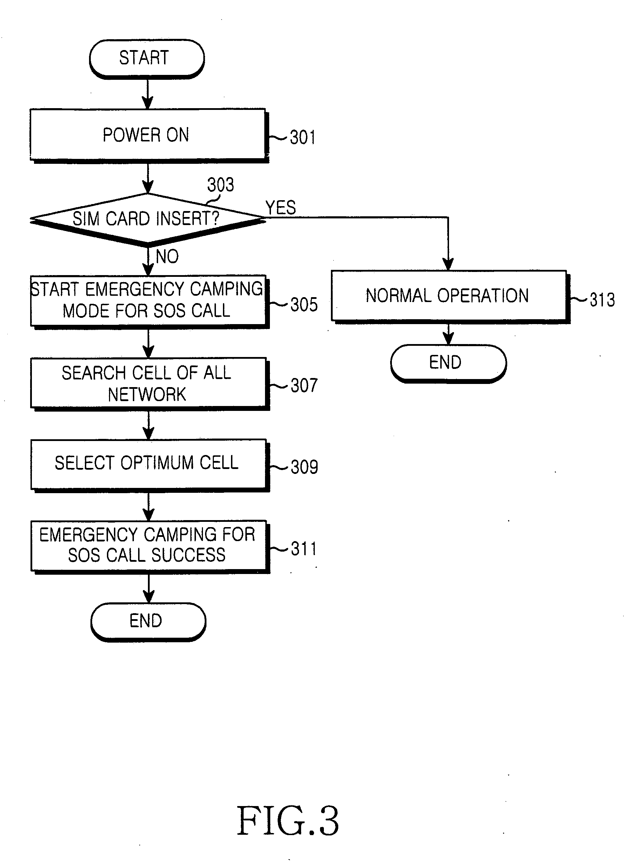

FIG. 3 is a flowchart showing a cell search process for an emergency call in the form of an SOS call when the SIM card 226 is not inserted in a mobile communication terminal according to the present invention.

If power is turned on in step 301, the MPU 200 proceeds to step 303 to check whether the SIM card 226 has been inserted.

If the SIM card 226 has been inserted, the MPU 200 proceeds to step 313 to operate normally and ends the process.

If the SIM card 226 has not been inserted, the MPU 200 proceeds to step 305 to check whether an emergency camping mode for an SOS call in an emergency has started. Here, the emergency camping mode searches for an optimum channel to transmit the SOS call to a server managing the SOS call when a user requests the SOS call in an emergency.

If the emergency camping mode has started, the MPU 200 proceeds to step 307 to search cells of all networks regardless of which network mode the mobile communication terminal is using.

For example, when the network mode the mobile communication terminal is using is a UMTS mode, the MPU 200 searches all cells including cells in a GSM network if the GSM network is set in a region where the mobile communication terminal is located.

After this, the MPU 200 proceeds to step 309 to select an optimum cell from the searched cells.

The MPU proceeds to step 311 to confirm successfully transmitting the SOS call in an emergency camping mode. Then, the process ends.

As described above, cells of all networks are searched regardless of which network mode is set in a dual mode communication terminal supporting a GSM communication and a UMTS communication, when a SIM card is not inserted in the dual mode terminal. And an optimum cell is selected from the searched cells to which an SOS call in an emergency is sent. Thus, it is possible to transmit the SOS call even in case that the network mode set by the user is different from the network installed in the region where the mobile communication terminal locates.

While the present invention has been shown and described with reference to certain preferred embodiments thereof, it will be understood by those skilled in the art that various changes in form and details may be made therein without departing from the scope of the present invention as defined by the appended claims.

## Claims

1. A method of a cell search for transmitting an emergency call in a plurality of modes mobile communication terminals, comprising the step of:
searching (307) cells of all networks supported by the mobile communication terminal, including a network of which network mode is preset by a user and all other supported networks of which network modes are not preset by the user, when a SIM card is not inserted (303) during an emergency call mode (305); and
selecting (309) an optimum cell.

2. The method of claim 1, wherein the plurality of modes mobile communication terminal is a dual mode terminal supporting a GSM communication and a UMTS communication.

3. The method of claim 1 or 2, further comprising:
transmitting the emergency call using the optimum cell.

4. The method of one of claims 1 to 3, wherein the optimum cell is a cell where channel condition is best.

5. An apparatus of a cell search for transmitting an emergency call in a mobile communication terminal supporting a plurality of network modes, comprising:
a controller (200) for searching cells of all networks supported by the mobile communication terminal, including a network of which network mode is preset by a user and all other supported networks of which network modes are not preset by the user, when a SIM card (226) is not inserted during an emergency call mode, and selecting an optimum cell.

6. The apparatus of claim 5, wherein the mobile communication terminal supporting a plurality of network modes is a dual mode terminal supporting a GSM communication and a UMTS communication.

7. The apparatus of claim 5 or 6, wherein the controller is adapted to transmit the emergency call using the optimum cell.

8. The apparatus of one of claims 5 to 7, wherein the optimum cell is a cell where channel condition is best.

## Patentansprüche

1. Verfahren einer Zellensuche zum Senden eines Notrufs in einem Mehrfachmodus-Mobilkommunikations-Endgerät, wobei das Verfahren den folgenden Schritt umfasst:
Suchen (307) von Zellen aller Netze, die von dem Mobilkommunikations-Endgerät unterstützt werden, einschließlich eines Netzes, dessen Netzmodus durch einen Benutzer voreingestellt ist, sowie aller anderen unterstützen Netze, deren Netzmodi durch den Benutzer nicht voreingestellt sind, während eines Notrufmodus (305), wenn eine SIM-Karte nicht eingeführt ist (303); und
Auswählen (309) einer optimalen Zelle.

2. Verfahren nach Anspruch 1, wobei das Mehrfachmodus-Mobilkommunikations-Endgerät ein Dualmode-Endgerät ist, das eine GSM-Kommunikation und eine UMTS-Kommunikation unterstützt.

3. Verfahren nach Anspruch 1 oder 2, das des Weiteren umfasst:
Senden des Notrufs unter Verwendung der optimalen Zelle.

4. Verfahren nach einem der Ansprüche 1 bis 3, wobei die optimale Zelle eine Zelle ist, in der die Kanalbedingungen am besten sind.

5. Vorrichtung für eine Zellensuche zum Senden eines Notrufs in einem Mobilkommunikations-Endgerät, das eine Vielzahl von Netzmodi unterstützt, wobei die Vorrichtung umfasst:
eine Steuereinrichtung (200) zum Suchen von Zellen aller Netze, die von dem Mobilkommunikations-Endgerät unterstützt werden, einschließlich eines Netzes, dessen Netzmodus durch einen Benutzer voreingestellt ist, sowie aller anderen unterstützten Netze, deren Netzmodi durch den Benutzer nicht voreingestellt sind, während eines Notrufmodus, wenn eine SIM-Karte (226) nicht eingeführt ist, und zum Auswählen einer optimalen Zelle.

6. Vorrichtung nach Anspruch 5, wobei das Mobilkommunikations-Endgerät, das eine Vielzahl von Netzmodi unterstützt, ein Dualmode-Endgerät ist, das eine GSM-Kommunikation und eine UMTS-Kommunikation unterstützt.

7. Vorrichtung nach Anspruch 5 oder 6, wobei die Steuereinrichtung so eingerichtet ist, dass sie den Notruf unter Verwendung der optimalen Zelle sendet.

8. Vorrichtung nach einem der Ansprüche 5 bis 7, wobei die optimale Zelle eine Zelle ist, in der die Kanalbedingungen am besten sind.

## Revendications

1. Procédé de recherche de cellule pour la transmission d'un appel d'urgence dans de multiples terminaux de communication mobile à modes, comprenant les étapes qui consistent :
à rechercher (307) des cellules de tous les réseaux supportés par le terminal de communication mobile, y compris un réseau dont un mode de réseau est préétabli par un utilisateur et tous les autres réseaux supportés dont les modes de réseau ne sont pas préétablis par l'utilisateur, lorsqu'aucune carte SIM n'est insérée (303) durant un mode (305) en appel d'urgence ; et
à sélectionner (309) une cellule optimale.

2. Procédé selon la revendication 1, dans lequel le terminal de communication mobile à modes multiples est un terminal à deux modes supportant une communication GSM et une communication UMTS.

3. Procédé selon la revendication 1 ou 2, comprenant en outre :
l'émission de l'appel d'urgence en utilisant la cellule optimale.

4. Procédé selon l'une des revendications 1 à 3, dans lequel la cellule optimale est une cellule où la condition des canaux est la meilleure.

5. Appareil de recherche de cellule pour transmettre un appel d'urgence dans un terminal de communication mobile supportant de multiples modes de réseaux, comportant :
- une unité de commande (200) destinée à rechercher des cellules de tous les réseaux supportés par le terminal de communication mobile, y compris un réseau dont un mode de réseau est préétabli par un utilisateur et tous les autres réseaux dont les modes de réseau ne sont pas préétablis par l'utilisateur, lorsqu'aucune carte SIM (226) n'est insérée pendant un mode d'appel d'urgence, et à sélectionner une cellule optimale.

6. Appareil selon la revendication 5, dans lequel le terminal de communication mobile supportant de multiples modes de réseau est un terminal à deux modes supportant une communication GSM et une communication UMTS.

7. Appareil selon la revendication 5 ou 6, dans lequel l'unité de commande est conçue pour émettre l'appel d'urgence en utilisant la cellule optimale.

8. Appareil selon l'une des revendications 5 à 7, dans lequel la cellule optimale est une cellule où la condition du canal est la meilleure.
